# EUROPÄISCHE PATENTSCHRIFT

(11) **EP 1 157 603 B1**
(45) Veröffentlichungstag und Bekanntmachung des Hinweises auf die Patenterteilung: **19.12.2007**
(21) Anmeldenummer: 01110538.4
(22) Anmeldetag: 28.04.2001
(51) Int. Cl.: A01F 15/07

(54) **Vorrichtung zum Umhüllen eines Rundballens**
Device for wrapping a round bale
Dispositif pour l'enveloppement de balles rondes

(30) Priorität: 25.05.2000 DE 10026066
(43) Veröffentlichungstag der Anmeldung: 28.11.2001
(73) Patentinhaber: DEERE & COMPANY, Moline, Illinois 61265-8098 (US)
(72) Erfinder: Huchet, Pierre-Philippe, 32600 L'Isle Jourdain (FR); Lucand, Philippe, 70120 Melin (FR)
(74) Vertreter: Magin, Ludwig Bernhard

(56) Entgegenhaltungen:
- EP-A- 0 459 045
- DE-C- 19 626 526
- GB-A- 1 011 281
- US-A- 4 827 699
- US-A- 5 581 973
- US-A- 5 715 655
- US-A- 6 006 504

## Beschreibung

**Die Erfindung betrifft eine Rundballenpresse mit einer Vorrichtung zum Umhüllen eines Rundballens mit Hüllmittel mit einer an die Oberfläche des Hüllmittels anlegbaren Bremse mit einem Kontaktelement und einer Stellvorrichtung.**

Die DE-U1-83 21 610 offenbart eine Rundballenpresse mit einer Netzbindevorrichtung mit einem Behälter zur Aufnahme einer Netzrolle, einer Bremse, einem Rollenpaar und einer Schneidvorrichtung. Der Behälter befindet sich an der Oberseite der Rundballenpresse und nimmt eine Rolle mit aufgewickeltem Netz auf, wobei die Rolle an den Wänden des Behälters während des Abwickelns zur Anlage kommt. Die Bremse enthält einen schwenkbaren Bügel mit einer quer verlaufenden Stange, die unter der Spannung einer Feder auf die Umfangsfläche der Rolle gedrückt wird. Die Rollen sind gegenläufig und können angetrieben werden, um das Netz von der Rolle abzuziehen und es in einen Ballenpreßraum zu führen, und es zu spannen, damit es stramm auf dem Rundballen aufliegt und von der Schneidvorrichtung getrennt werden kann. Die Schneidvorrichtung wird am Ende des Wickelvorgangs betätigt und wirkt auf das gespannte Netz.

Aus der WO-A1-9705767 geht eine Rundballenpresse mit einer Netz- oder Folienwickelvorrichtung hervor, bei der das freie Netz- oder Folienende dadurch mit dem Erntegut in Eingriff bringbar und somit um den Rundballen wickelbar ist, daß die Netz- oder Folienwickelvorrichtung insgesamt vertikal verstellt wird. Der abgewickelte Teil des Netzes oder der Folie wird von einer Rolle getrennt, indem die Rolle abgebremst oder sogar angehalten wird, so daß das Netz oder die Folie abreißt. Wie eine evtl. Bremse aussehen und angeordnet sein könnte, ist nicht offenbart.

Gemäß der US-A-4,956,968 ist eine Rundballenpresse mit einer Netzwickelvorrichtung versehen, deren Netzende mittels eines schwenkbaren Zuführarms in den Bereich zwischen Preßelementen und den Rundballen eingeführt wird. Auf die Netzrolle selbst wirkt keine Bremse.

Aus diesem Stand der Technik ergeben sich somit verschiedene Arten von Bremsen - einmal solche, die ein Nachlaufen der Rolle mit Hüllmittel verhindern sollen, so daß sich kein Hüllmittel aufbaut, und zum anderen gibt es Bremsen, die den Lauf des Hüllmittels verzögern, so daß es fest um den Rundballen gewickelt wird und reißt oder gut geschnitten werden kann.

Das der Erfindung zugrunde liegende Problem wird darin gesehen, daß die bisher bekannten Bremsen/Rollen **und die Vorrichtungen zum Zuführen des Hüllmittel**s und mit ihnen ausgestattete Rundballenpressen zu aufwendig sind.

**Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.**

Eine Rundballenpresse mit einer erfindungsgemäßen Vorrichtung kann auf die Verwendung von Hüllmittelförderrollen verzichten, wenn das Hüllmittel, bzw. ein freies Ende von ihm in den Erntegutfluß oder in Kontakt mit diesem gebracht und von diesem weiterbefördert wird. Mit dem Wegfall der Hüllmittelförderrollen entfällt auch deren Antrieb, was zusätzlich Kosten spart und dadurch auch die Störanfälligkeit senkt. **Die auf das Hüllmittel wirkende Bremse kann beide Funktionen ausüben,** nämlich den Nachlauf des Hüllmittels verhindern und dessen Spannung während des Wickelns bewirken. Das Hüllmittel kann auf einer Rolle gelagert oder aus einem Kasten gezogen oder auf sonstige Weise bevorratet und abgegeben werden. Die Stellvorrichtung kann als eine Schwenkvorrichtung ausgebildet werden oder als eine Stange oder Platte, die geradlinig auf das Hüllmittel zubewegt werden kann.

Das motorische Aufbauen des Widerstands läßt auch eine Veränderung oder Anpassung des Reib- bzw. Abziehwiderstands an bestimmte betriebliche Situationen zu. So kann z. B. zu Beginn des Wickelvorgangs ein geringer Widerstand und kurz vor dem Trennen des Hüllmittels ein sehr hoher Widerstand aufgebaut werden.

Die Verwendung einer Steuer- oder Regelvorrichtung ermöglicht es, Signale von Sensoren z. B. über die abgezogene Menge von Netz oder Folie, die Abzugsgeschwindigkeit und dergl. zu verwerten und danach den Andrückzeitpunkt und die Andrückkraft festzulegen.

Aufgrund ihrer einfachen Ansteuerbarkeit und hohen aufbietbaren Kräfte eignen sich Hydraulik- oder Elektromotoren hervorragend zur Betätigung der Bremse. Bei den Hydraulikmotoren handelt es sich vorzugsweise um einen oder mehrere Hydraulikzylinder und bei den Elektromotoren um solche mit einer Gewindespindel.

Zwar liegt es im Rahmen der Erfindung, das Kontaktelement als eine Stange, eine Platte aus Blech oder dergleichen herzustellen; die Verwendung von Rollen auf einem Träger verringert jedoch die Reibung an der kleinen Kontaktstelle und somit evtl. problematische Hitzeentwicklung. Die Rollen können sehr leichtlaufend oder mit einem bestimmten Rollwiderstand versehen sein. Zudem kann die Oberfläche der Rollen profiliert oder mit einem rutschfesten Belag versehen sein, so daß aus der Zahl der Umdrehungen der Rolle auf die Umdrehungen der Hüllmittelrolle geschlossen werden kann. Aus der Stellung des Kontaktelements kann zudem auf den Durchmesser der Hüllmittelrolle geschlossen und folglich die Menge abgerollten Hüllmittels berechnet werden.

Das freie und von dem Erntegut zu erfassende Ende des Hüllmittels kann sicher an die gewünschte Stelle oder in Anlage mit einem fördernden Element, z.B. Riemen, Preßwalzen, oder dergleichen gebracht werden, wenn eine Leitfläche z. B. als Blech, Kunststoff-Platte, Rechen oder dergleichen vorgesehen ist.

Das Hüllmittel muß nicht abgerissen werden, wenn eine Trennvorrichtung vorgesehen ist. Eine solche Trennvorrichtung kann mit scherenden Elementen oder mit Zähnen versehen sein, die das Hüllmittel an einer bestimmten Stelle trennt. Wenn sich die Trennvorrichtung zwischen der Ballenbildungskammer und dem Ende der Leitfläche befindet, verbleibt ein Rest des Hüllmittels, der über die Leitfläche herabhängen und somit in der Art eines Garnendes in Eingriff mit dem Erntegut gebracht werden kann.

Wenn sich das Hüllmittel über die gesamte Breite der Ballenpreßkammer oder gar über diese hinaus erstreckt, kann der Rundballen mit wenigen Umdrehungen vollkommen mit Hüllmittel bedeckt werden.

In der Zeichnung ist ein nachfolgend näher beschriebenes Ausführungsbeispiel der Erfindung dargestellt. Es zeigt:
- Fig. 1: eine Rundballenpresse mit einer Vorrichtung zum Umhüllen eines Rundballens in schematischer Darstellung und in Seitenansicht,
- Fig. 2: die Vorrichtung in vergrößerter Darstellung in einem Außerbetriebs- oder Wartezustand,
- Fig. 3: die Vorrichtung in vergrößerter Darstellung in einem Betriebs- oder Umhüllungszustand und
- Fig. 4: einen Bereich der Vorrichtung in perspektivischer Darstellung.

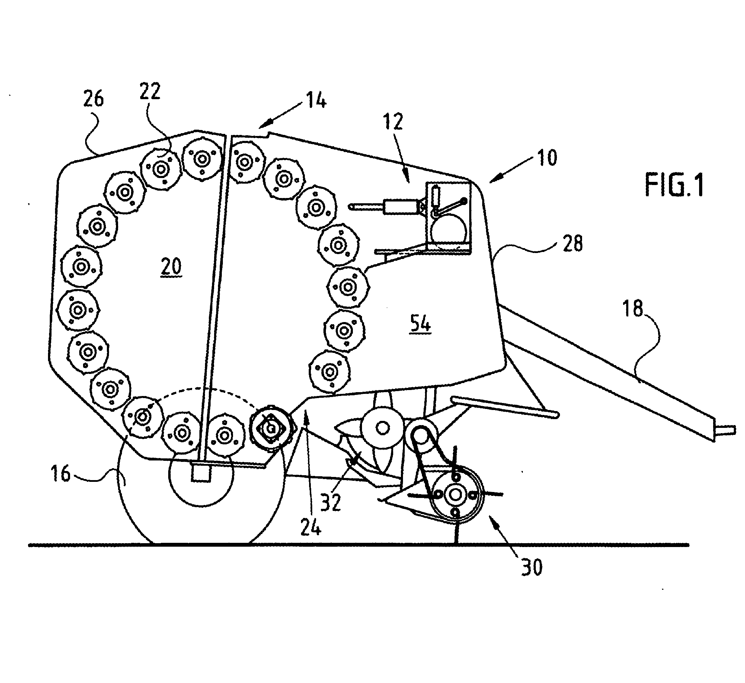

Figur 1 zeigt eine Rundballenpresse 10 mit einer Vorrichtung 12 zum Umhüllen eines Rundballens in der Rundballenpresse 10.

Die Rundballenpresse 10 enthält einen Rahmen 14, der sich auf Rädern 16 auf dem Boden abstützt und mittels einer Deichsel 18 an ein Zugfahrzeug angehängt werden kann. In der Rundballenpresse 10 ist eine Ballenpreßkammer 20 gebildet, die im wesentlichen von Rollen 22 umschlossen wird. Mit Blick auf Figur 1 befindet sich in nahezu 5-Uhr-Stellung ein Ernteguteinlaß 24, durch den Erntegut zugeführt wird. Das Fahrgestell 14 unterteilt sich in einen rückwärtigen vertikal schwenkbaren Gehäuseteil 26 und einen vorderen festen Gehäuseteil 28, in denen jeweils ungefähr die Hälfte der Rollen 22 auf einem Teil eines Kreisbogens angeordnet sind. Das Erntegut wird von dem Boden mittels eines Aufnehmers 30 angehoben und nach hinten zu dem Ernteguteinlaß 24 gefördert. Zwischen dem Aufnehmer 30 und dem Ernteguteinlaß 24 ist in diesem Ausführungsbeispiel ein Schneidwerk 32 vorgesehen. In der bisherigen Beschreibung entspricht die Rundballenpresse 10 einer herkömmlicher Bauart und bedarf keiner weiteren Beschreibung.

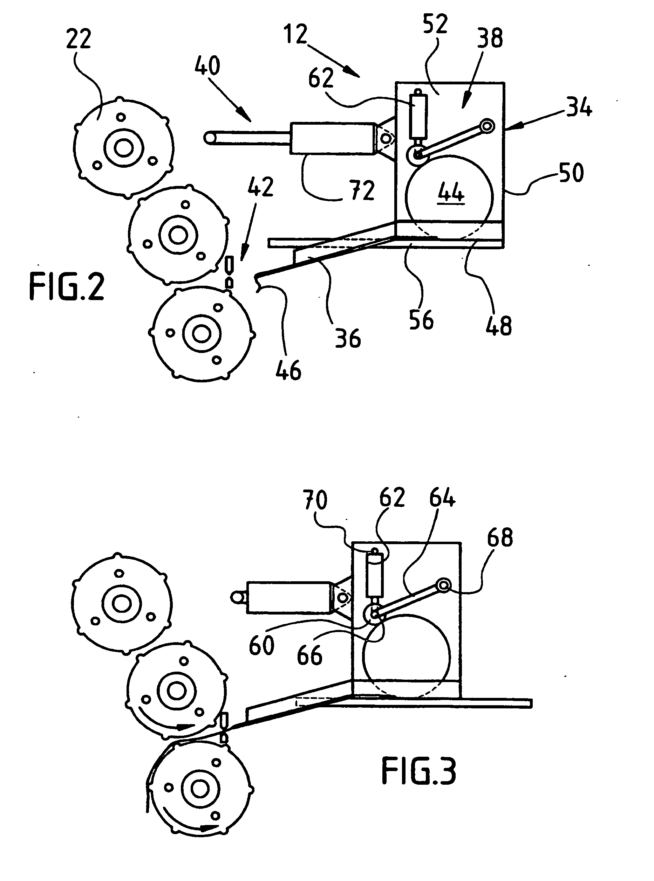

Die Vorrichtung 12 ist in den Figuren 2 und 3 vergrößert dargestellt und wird nunmehr anhand dieser Figuren näher beschrieben.

Die Vorrichtung 12 enthält ein Gehäuse 34, eine Leitfläche 36, eine Bremse 38, eine Verstellvorrichtung 40 und eine Trennvorrichtung 42.

Die Vorrichtung 12 befindet sich in dem oberen Bereich des vorderen Gehäuseteils 28 und dient dazu, auf einem Aufnehmer 44 bevorratetes Hüllmittel 46 so bereitzuhalten und zu fördern, daß es auf die Umfangsfläche eines in der Ballenpreßkammer 20 gebildeten Rundballens aufgelegt werden kann. Das Hüllmittel 46 erstreckt sich vorzugsweise über die gesamte Breite der Ballenpreßkammer 20 oder sogar über diese hinaus.

Das Gehäuse 34 ist als ein Blechkasten ausgebildet, der oben und hinten offen ist und einen Boden 48, eine Vorderwand 50 und mit diesen verbundene Seitenwände 52 aufweist. Das Gehäuse 34 erstreckt sich zwischen zwei Seitenwänden 54 des vorderen Gehäuseteils 28 und ist auf Schienen 56 in der Richtung der Längsmittenachse der Rundballenpresse 10 verschiebbar gelagert, wobei die Darstellung sehr vereinfacht ist. In dem Gehäuse 34 befindet sich der Aufnehmer 44 mit dem Hüllmittel 46. Der Aufnehmer 44 ist als eine Rolle gebildet, die in diesem Ausführungsbeispiel auf dem Boden 48 und an der Wand 50 abrollt. Alternativ könnte der Aufnehmer 44 auf einer Achse drehbar gelagert sein, wobei die Achse in den Seitenwänden 52 starr gehalten oder in Richtung auf die Vorderwand 50 beweglich ist.

Die Leitfläche 36 ist in der Art eines Kanals aus Blech, Kunststoff, Stäben oder dergleichen gebildet und erstreckt sich ausgehend von dem Boden 48 zu den Rollen 22 hin. Die Leitfläche 36 verläuft von dem Boden 48 ausgehend nach unten und erstreckt sich in der Situation nach Figur 2 bis vor die Rollen 22. Die Seitenbereiche der Leitfläche 36 sind streckenweise nach oben gebogen, um die Kanalform zu erzeugen. Das Hüllmittel 46 gleitet auf der Oberseite der Leitfläche 36 von dem Aufnehmer 44 bis über das Ende der Leitfläche 36 und mithin zu dem Spalt zwischen zwei benachbarten Rollen 22. Oberhalb der Leitfläche 36 könnte noch eine Deckfläche vorgesehen werden, die verhindert, daß sich Schmutz auf der Leitfläche 36 ansetzt, der den Hüllmittellauf behindert.

Die Bremse 38 befindet sich in dem Gehäuse 34 und weist folgende Einzelteile auf - eine Stellvorrichtung 58, ein Kontaktelement 60 und einen Motor 62.

Die Bremse 38 hat die Aufgabe, den Lauf des Hüllmittels 46 zurückzuhalten, so daß es mit Spannung auf die Umfangsfläche des Rundballens aufgelegt wird. Außerdem wird die Spannung hoch gehalten, damit Hüllmittel 46 sicher getrennt werden kann. Die Bremse 38 ist derart ausgebildet, daß sie trotz abnehmenden Durchmessers des Aufnehmers 44 stets die gleiche Spannung in dem Hüllmittel 46 erzeugt. Die Bremse 38 ist derart mit dem Gehäuse 34 verbunden, daß sie sich mit diesem bewegt bzw. stets die gleiche Stellung zu dem Aufnehmer 44 bewahrt.

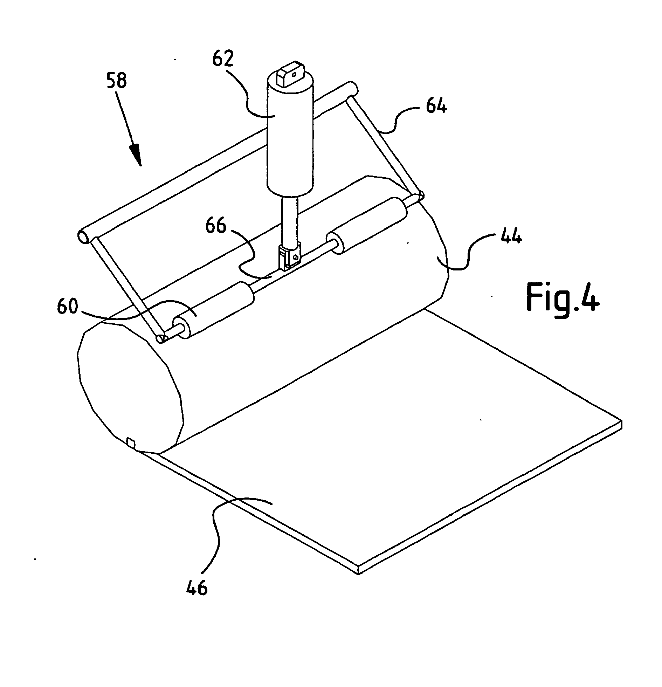

Die Verstellvorrichtung 40 enthält im dargestellten Ausführungsbeispiel einen reckteckförmigen Rohrrahmen mit Schwenkarmen 64 und einer Querspange 66 - sh. Figur 4. Die Schwenkarme 64 sind einenends in einem Lager 68 in der jeweiligen Seitenwand 52 des Gehäuses 34 vertikal schwenkbar gelagert und anderenends an die Querspange 66 angeschlossen. Auf der Querspange 66 befinden sich zwei Kontaktelemente 60, die als Hülsen ausgebildet und auf der Querspange 66 drehbar gelagert sind. Aufgrund der drehbaren Lagerung wird eine Hitzeentwicklung zwischen den Kontaktelementen 60 und der Querspange 66 und dem Hüllmittel 46 vermieden. Die Kontaktelemente 60 sind z. B. aus einem verschleißfesten Kunststoff gebildet und mit einer profilierten Oberfläche versehen. Die Kontaktelemente 60 sind jeweils in den Seitenbereichen der Querspange 66 vorgesehen, könnten sich aber auch über deren gesamte Oberfläche erstrecken.

Der Motor 62 erstreckt sich zwischen einem zweiten Lager 70 an den Seitenwänden 52 oder einer sich zwischen diesen erstreckenden Achse und der Querspange 66 und dient dazu, die Querspange 66 mit den Kontaktelementen 60 stets in fester und gegebenenfalls variabler Anlage an der Umfangsfläche des Aufnehmers 44 zu halten. Der Motor 62 ist in dem vorliegenden Ausführungsbeispiel als ein Hydraulikzylinder ausgebildet, der aus- und eingefahren werden kann. Hierzu ist eine nicht gezeigte Steuer- oder Regelvorrichtung vorgesehen, die auf verschiedene Weise funktionieren kann, deren Ausgangsgröße jedenfalls die Spannung in dem Hüllmittel 46 den jeweiligen Anforderungen anpaßt. Der Motor 62 greift zwischen den Kontaktelementen 60 an der Querspange 66 an, wobei die Lager 68, 70 und der Angriffspunkt des Motors 62 auf der Querspange 66 ein Dreieck bilden.

Die Verstellvorrichtung 40 enthält einen Stellmotor 72 samt eines nicht gezeigten Stellsystems und die Schienen 56, auf denen das Gehäuse 34 ruht. Die Verstellvorrichtung 40 hat die Aufgabe, das Gehäuse 34 und die Leitfläche 36 auf die Ballenpreßkammer 20 zu oder von dieser wegzubewegen, wie dies in den Figuren 2 und 3 gezeigt ist. Auf diese Weise gelangt das freitragende Ende der Leitfläche 36 mit dem von ihm herabhängenden Ende des Hüllmittels 46 in den Spalt zwischen zwei Rollen 22 und von dort in die Ballenpreßkammer 20, wo es zwischen der Umfangsfläche der Rundballens und den Rollen 22 eingeklemmt und von diesen mitgenommen wird. Aus den Figuren 2 und 3 folgt, daß die Vorrichtung 12 zu der Ballenpreßkammer 20 hinbewegt wird, wenn der Wickelvorgang eingeleitet werden soll, und von dieser wegbewegt wird, wenn der Wickelvorgang beendet werden soll. Anstatt der dargestellten Führung auf Schienen 56 können auch beliebige andere Methoden für die Verstellung verwendet werden, z. B. Lenker, Rollen und Nuten, etc.. Während die Schienen 56 im wesentlichen horizontal ausgerichtet dargestellt sind, können diese auch geneigt oder auf einer bestimmten Kurvenbahn verlaufen. Wesentlich ist jeweils nur, daß das Hüllmittel 46 zuverlässig in den Spalt zwischen zwei Rollen 22 eingeführt und die Leitfläche 36 zum Trennvorgang wieder herausgezogen werden kann.

Die Trennvorrichtung 42 ist in der Art einer Schere dargestellt, deren Schneiden in einem äußeren Zwickelbereich zwischen zwei Rollen 22 vorgesehen sind. Je nach dem möglichen Stellweg der Vorrichtung 12 kann die Trennvorrichtung 42 auch anders ausgebildet oder weiter von den Rollen 22 entfernt angeordnet werden. Die Trennvorrichtung 42 ist so ausgebildet, daß sie einen Durchtritt des herabhängenden Hüllmittelendes und evtl. auch des freitragenden Endes der Leitfläche 36 zuläßt. Die Trennvorrichtung 42 wird automatisch nach dem Ende des Umhüllungsvorgangs aktiviert, wobei das Hüllmittel 46 so abgeschnitten wird, daß ein ausreichend langer Endabschnitt vom Ende der Leitfläche 36 herabhängt. Nach einer alternativen nicht dargestellten Ausführungsform enthält die Trennvorrichtung 42 eine obere oder untere z. B. gezahnte und feststehende Trennleiste. Das Hüllmittel 46 wird dann dadurch an diese Trennleiste angelegt und von dieser getrennt, daß sich z. B. der Aufnehmer 44 quer zur Trennleiste bewegt und das Hüllmittel 46 über diese spannt; dies kann durch eine geeignete Führung durch die Schienen 56 erfolgen, die hierzu z. B. nicht horizontal, sondern geneigt oder ansteigend verlaufen.

Nach alledem ergibt sich folgende Funktion.

Es wird ausgegangen von einem Zustand, wie er in den Figuren 1 und 2 gezeigt ist und in dem keine Umhüllung des Rundballens stattfindet. Das herabhängende Ende des Hüllmittels 46 gelangt nicht in Eingriff mit oder in Anlage an dem Rundballen. Der Motor 62 ist derart beaufschlagt, daß er den Aufnehmer 44 des Hüllmittels 46 bewegungslos in dem Gehäuse 34 hält. Der Stellmotor 72 ist ausgefahren.

Um den Umwickelvorgang einzuleiten, wird der Stellmotor 72 eingefahren und somit das Gehäuse 34 mit der Leitfläche 36 zu der Ballenpreßkammer 20 hinbewegt, so daß das Hüllmittelende und evtl. auch das freie Ende der Leitfläche 36 in den Spalt zwischen zwei Rollen 22 eintreten. Das Hüllmittel 46 wird von einer der Rollen 22 erfaßt und in die Ballenpreßkammer 20 gefördert. Die Bremse 38 übt einen geringen oder gar keinen Druck aus. Nach vollendeter Verstellung - sh. Figur 3 - liegt das Ende des Hüllmittels 46 an dem Rundballen an und wird in die Ballenpreßkammer 20 hineingezogen. Während das Hüllmittel 46 von dem Aufnehmer 44 abgezogen wird, übt die Bremse 38 auf den Aufnehmer 44 einen Druck aus, so daß das Hüllmittel 46 gespannt wird. Mittels nicht gezeigter Sensoren, die die Stellung des Schwenkarms 64 oder die Druckkraft des Motors 62 erfassen, wird eine Nachführung der Stellvorrichtung 58 derart erreicht, daß grundsätzlich stets die gleiche Spannung in dem Hüllmittel 46 herrscht.

Sobald der Wickelvorgang abgeschlossen ist, wird das Gehäuse 34 mit der Leitfläche 36 soweit zurückgezogen, bis sich lediglich noch das Hüllmittel 46 in der Trennvorrichtung 42 befindet. Anschließend wird die Trennvorrichtung 42 betätigt, so daß das freie Ende des Hüllmittels 46 über das Ende der Leitfläche 36 herabhängt und für den Start des nächsten Wickelvorgangs bereitsteht. Abschließend wird das Gehäuse 34 und die Leitfläche 36 vollends in die Stellung nach Figur 2 zurückgeschoben.

## Patentansprüche

1. Rundballenpresse mit einer Vorrichtung (12) zum Umhüllen eines Rundballens mit Hüllmittel (46) mit einer an die Oberfläche des Hüllmittels (46) anlegbaren Bremse (38) mit einem Kontaktelement (60) und einer Stellvorrichtung (58), **dadurch gekennzeichnet, daß** die Vorrichtung in ihrer wesentlichen Gesamtheit zu einem in der Rundballenpresse (10) gebildeten Rundballen hin und von diesem weg bewegbar ist und die Bremse (38) mittels eines Motors (62) an das Hüllmittel (46) anlegbar ist.

2. Rundballenpresse nach Anspruch 1, **dadurch gekennzeichnet, daß** die Anlagekraft veränderbar ist.

3. Rundballenpresse nach Anspruch 1 oder 2, **dadurch gekennzeichnet, daß** die Anlagekraft mittels einer Steuer- oder Regelvorrichtung veränderbar ist.

4. Rundballenpresse nach einem oder mehreren der vorherigen Ansprüche, **dadurch gekennzeichnet, daß** der Motor (62) ein Hydraulik- oder Elektromotor ist.

5. Rundballenpresse nach einem oder mehreren der vorherigen Ansprüche, **dadurch gekennzeichnet, daß** das Kontaktelement (60) eine oder mehrere Rollen aufweist.

6. Rundballenpresse nach einem oder mehrerender vorherigen, Anspruch **dadurch gekennzeichnet, daß** die Vorrichtung eine Leitfläche (36) für das Hüllmittel (46) aufweist.

7. Rundballenpresse nach einem oder mehreren der vorherigen Ansprüche, **gekennzeichnet durch** eine Trennvorrichtung (42) zwischen einer Ballenbildungskammer (20) und dem Endbereich der Leitfläche (36).

8. Rundballenpresse nach einem oder mehreren der vorherigen Ansprüche, **dadurch gekennzeichnet, daß** die Vorrichtung (12) zum Zuführen von Hüllmittel (46) ausgebildet ist, das sich wenigstens über die gesamte Breite der Ballenpreßkammer (20) erstreckt.

## Claims

1. Round baler comprising a device (12) for wrapping a round bale with wrapping means (46) with a brake (38) which may be applied to the surface of the wrapping means (46), with a contact element (60) and an adjusting device (58), **characterized in that** the device in its substantial entirety may be moved towards a round bale formed in the round baler (10) and may be moved away therefrom and the brake (38) may be applied to the wrapping means (46) by means of a motor (62).

2. Round baler according to Claim 1, **characterized in that** the bearing force may be altered.

3. Round baler according to Claim 1 or 2, **characterized in that** the bearing force may be altered by means of a control or regulating device.

4. Round baler according to one or more of the preceding claims, **characterized in that** the motor (62) is a hydraulic or electric motor.

5. Round baler according to one or more of the preceding claims, **characterized in that** the contact element (60) comprises one or more rollers.

6. Round baler according to one or more of the preceding claims, **characterized in that** the device comprises a guide surface (36) for the wrapping means (46).

7. Round baler according to one or more of the preceding claims, **characterized by** a separating device (42) between a bale forming chamber (20) and the end region of the guide surface (36).

8. Round baler according to one or more of the preceding claims, **characterized in that** the device (12) is configured for supplying wrapping means (46), which extends at least over the entire width of the baling chamber (20).

## Revendications

1. Presse à balles rondes avec un dispositif (12) pour l'enrubannage d'une balle ronde avec un matériau d'enrubannage (46), avec un frein (38) à appliquer sur la surface du matériau d'enrubannage (46) avec un élément de contact (60) et un dispositif de réglage (58), **caractérisée en ce que** le dispositif est mobile sensiblement dans son ensemble pour se déplacer vers une balle ronde formée dans la presse à balles rondes (10) et pour s'écarter de celle-ci, et le frein (38) peut être appliqué contre le matériau d'enrubannage (46) au moyen d'un moteur (62).

2. Presse à balles rondes selon la revendication 1, **caractérisée en ce que** la force d'appui est variable.

3. Presse à balles rondes selon la revendication 1 ou 2, **caractérisée en ce que** la force d'appui peut être variée au moyen d'un dispositif de commande ou de réglage.

4. Presse à balles rondes selon une ou plusieurs des revendications précédentes, **caractérisée en ce que** le moteur (62) est un moteur hydraulique ou un moteur électrique.

5. Presse à balles rondes selon une ou plusieurs des revendications précédentes, **caractérisée en ce que** l'élément de contact (60) comporte un ou plusieurs rouleaux.

6. Presse à balles rondes selon une ou plusieurs des revnedications précédentes, **caractérisée en ce que** le dispositif comporte une surface de guidage (36) pour le matériau d'enrubannage (46).

7. Presse à balles rondes selon une ou plusieurs des revendications précédentes, **caractérisée par** un dispositif de séparation (42) entre une chambre de formage de la balle (20) et la zone d'extrémité de la surface de guidage (36).

8. Presse à balles rondes selon une ou plusieurs des revendications précédentes, **caractérisée en ce que** le dispositif (12) est réalisé pour acheminer le matériau d'enrubannage (46), qui s'étend au moins sur toute la largeur de la chambre de formage de la balle (20).
